# EUROPEAN PATENT APPLICATION

(11) **EP 4 443 290 A1**
(43) Date of publication of application: **09.10.2024**
(21) Application number: 23213268.8
(22) Date of filing: 30.11.2023
(51) Int. Cl.: G06F 8/65, G06F 21/57

(54) **ELECTRONIC CONTROLLER FLASH METHOD, ELECTRONIC CONTROLLER, AND MANAGEMENT SERVER**

(30) Priority: 06.04.2023 CN 202310361899
(71) Applicant: Chongqing Changan Automobile Co., Ltd., Chongqing 400023 (CN)
(72) Inventor: Wang, Xiangyang, Chongqing 400023 (CN); Zhang, Xian, Chongqing 400023 (CN); Zhang, Peng, Chongqing 400023 (CN); Tan, Chengyu, Chongqing 400023 (CN)
(74) Representative: Patentanwaltskanzlei Matschnig & Forsthuber OG

(57) **Abstract**

Provided are an electronic controller programming method, an electronic controller, and a management server. The electronic controller sends device information to a programming tool; the programming tool sends the device information to the management server, so that the management server can generate, according to the device information, an authorization file encrypted by a private key, and a software package and send the authorization file and the software package to the programming tool; the programming tool programs the electronic controller with the authorization file; the electronic controller uses a local public key to perform signature verification on the authorization file; after the signature verification succeeds, software packet feature information in the authorization file is further compared with the device information, and the software package is programmed to the electronic controller in a case that a comparison result satisfies a preset condition. Through the signature verification performed on the authorization file through the public key, the security of the software package is ensured, and the electronic controller is prevented from being programmed with a software package from an unknown source; and meanwhile, a content of the authorization file is verified, which further ensures that the software package satisfies the preset condition and avoids wrong programming.

## Description

### Field of the Invention

The present disclosure relates to the field of programming of electronic controllers, and in particular, to an electronic controller programming method, an electronic controller, a management server, an electronic device, and a readable storage medium.

### Background of the Invention

In order to make intelligent vehicles adapt to different usage environments or improve the overall performance of the intelligent vehicles, software configured in an Electronic Control Unit (ECU) needs to be upgraded by programming the ECU.

ECU data programming refers to management and update of ECU data achieved by sending data information to the ECU by an external data programming tool through an ECU communication network.

However, when the external data programming tool programs the ECU with a software package, the ECU does not verify a source of the software package. As a result, the ECU will possibly be programmed with a software package from an unknown source, posing a security risk.

### Summary of the Invention

In view of the above problem, the embodiments of the present disclosure provide an electronic controller programming method, an electronic controller, and a management server to address the above problem or at least partially address the above problem.

According to a first aspect, the embodiments of the present application disclose an electronic controller programming method, applied to an electronic controller, where the electronic controller communicates with a programming tool, and the method includes:
sending device information to the programming tool in response to an authorization request sent by the programming tool, so that the programming tool sends the device information to a management server;
receiving an authorization file sent by the programming tool, where the authorization file is generated by the management server according to the device information and sent to the programming tool, and the authorization file is signed and encrypted through a private key of the management server;
acquiring software package feature information from the authorization file in a case that the authorization file is successfully decrypted through a locally stored public key, and comparing the device information with the software package feature information to obtain a comparison result; and
receiving, in a case that the comparison result satisfies a preset condition, a software package sent by the programming tool, and programming the electronic controller with the software package, where the software package is generated by the management server according to the device information and sent to the programming tool.

According to a second aspect, the embodiments of the present application disclose an electronic controller programming method, applied to a management server, where the management server communicates with a programming tool, and the method includes:
receiving device information sent by the programming tool, and matching a corresponding software package according to the device information;
acquiring software package feature information from the software package, and signing and encrypting the software package feature information by using a locally stored private key to generate an authorization file; and
sending the authorization file and the software package to the programming tool, so that the programming tool sends the authorization file to an electronic controller, and programming the electronic controller with the software package in a case that the electronic controller successfully decrypts the authorization file through a local public key stored in the electronic controller and a comparison result between the device information of the electronic controller and the software package feature information satisfies a preset condition.

According to a third aspect, the embodiments of the present application disclose an electronic controller, where the electronic controller includes:
a first sending module, configured to send device information to the programming tool in response to an authorization request sent by a programming tool, so that the programming tool sends the device information to a management server;
a first receiving module, configured to receive an authorization file sent by the programming tool, where the authorization file is generated by the management server according to the device information and sent to the programming tool, and the authorization file is signed and encrypted through a private key of the management server;
a decryption module, configured to acquire software package feature information from the authorization file in a case that the electronic controller successfully decrypts the authorization file through a locally stored public key, and compare the device information with the software package feature information to obtain a comparison result; and
a second receiving module, configured to receive, in a case that the comparison result satisfies a preset condition, a software package sent by the programming tool, and program the electronic controller with the software package, where the software package is generated by the management server according to the device information and sent to the programming tool.

According to a fourth aspect, the embodiments of the present application disclose a management server, where the management server includes:
a matching module, configured to receive device information sent by a programming tool, and match a corresponding software package according to the device information;
an encryption module, configured to acquire software package feature information from the software package, and sign and encrypt the software package feature information by using a locally stored private key to generate an authorization file; and
a second sending module, configured to send the authorization file and the software package to the programming tool, so that the programming tool sends the authorization file to an electronic controller, and program the electronic controller with the software package in a case that the electronic controller successfully decrypts the authorization file through a local public key stored in the electronic controller and a comparison result between the device information of the electronic controller and the software package feature information satisfies a preset condition.

According to a fifth aspect, the embodiments of the present application disclose an electronic device, including a processor and a memory, where the memory stores programs or instructions runnable on the processor, and the programs or the instructions, when executed by the processor, implement the steps of the methods as described in the first aspect and the second aspect.

According to a sixth aspect, the embodiments of the present application disclose a readable storage medium, where the readable storage medium stores programs or instructions, and the programs or the instructions, when executed by a processor, implement the steps of the method as described in any one of the first aspect and the second aspect.

In the embodiments of the present application, the electronic controller communicates with the programming tool; the programming tool also communicates with the management server; in response to the authorization request sent by the programming tool, the electronic controller sends the device information to the programming tool; the programming tool sends the device information to the management server, so that the management server can generate, according to the device information, the authorization file encrypted by the private key, and the software package and send the authorization file and the software package to the programming tool; the programming tool programs the electronic controller with the authorization file; the electronic controller uses the local public key to perform signature verification on the authorization file; in a case that the signature verification succeeds, the software packet feature information in the authorization file is further compared with the device information; and the software package is programmed to the electronic controller in a case that the comparison result satisfies the preset condition. The present application performs, by using the public key of the electronic controller, the signature verification on the authorization file encrypted by the private key of the management server to confirm that the authorization file and the software package are both from the management server, rather than other third parties, which ensures the security of the software package. Further, the present application further compares the software package feature information in the authorization file with the device information to determine whether the software package is a software package that satisfies the preset condition, which further avoids the security risk because an unmatched software package is programmed to the electronic controller, and also saves the cost of subsequent correction.

### Brief Description of the Drawings

FIG. 1 is a flowchart of steps of an electronic controller programming method, applied to an electronic controller, according to an embodiment of the present disclosure;
FIG. 2 is a flowchart of an ECU software programming authorization protection method according to an embodiment of the present disclosure;
FIG. 3 is an interaction diagram of a programming process according to an embodiment of the present disclosure;
FIG. 4 is a flowchart of steps of an electronic controller programming method, applied to a management server, according to an embodiment of the present disclosure;
FIG. 5 is a flowchart of generating an authorization file and a software package by a management server according to an embodiment of the present disclosure;
FIG. 6 is a flowchart of software package programming operation according to an embodiment of the present disclosure;
FIG. 7 is a block diagram of an electronic controller according to an embodiment of the present disclosure;
FIG. 8 is a block diagram of a management server according to an embodiment of the present disclosure;
FIG. 9 is a block diagram of an electronic device according to the present application; and
FIG. 10 is a block diagram of an electronic device according to another embodiment of the present application.

### Detailed Description of the Embodiments

The exemplary embodiments of the present disclosure will be described in more detail below with reference to the accompanying drawings. Although the accompanying drawings show the exemplary embodiments of the present disclosure, it should be understood that the present disclosure can be implemented in various forms, and should not be limited to the embodiments stated herein. Rather, these embodiments are provided for understanding the present disclosure more thoroughly, and can completely transfer the scope of the present disclosure to those skilled in the art.

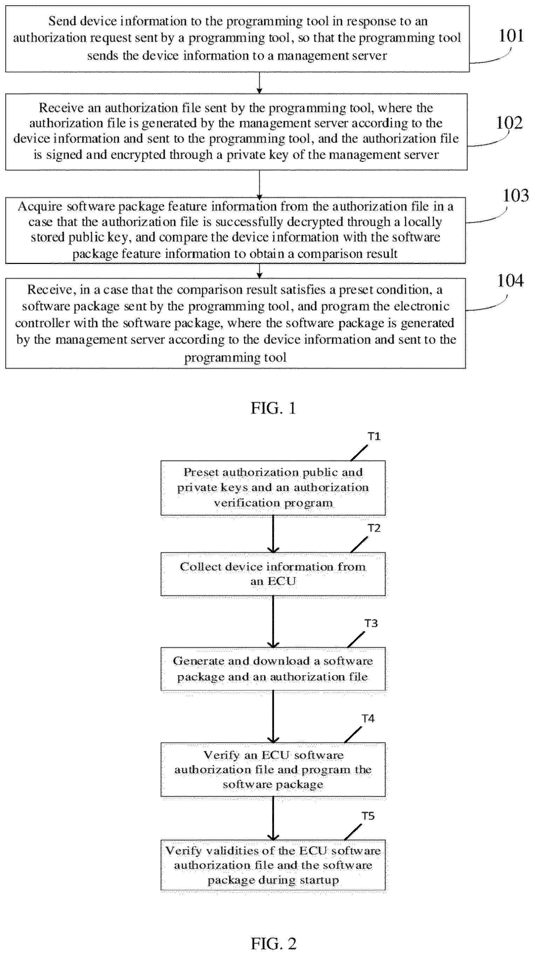

FIG. 1 shows a flowchart of steps of an electronic controller programming method according to an embodiment of the present disclosure, which is applied to an electronic controller, where the electronic controller communicates with a programming tool, and the method includes:
In step 101, device information is sent to the programming tool in response to an authorization request sent by the programming tool, so that the programming tool sends the device information to a management server.

In the embodiments of the present disclosure, an Electronic Control Unit (ECU), also referred to as a "driving computer" of a vehicle, is used to control a driving state of the vehicle and achieve various functions. A state of the vehicle and an intention of a driver are determined mainly using data acquisition and exchange of various sensors and buses, and the vehicle is operated and controlled through an actuator. ECU data programming can change data or program codes inside the ECU individually or in batches, conveniently achieving ECU data update and enabling the ECU to meet control needs of different vehicles. The programming tool is configured to communicate with the ECU and send data information to the ECU, achieving management and update of ECU data. The programming tool can be arranged in the vehicle, or can be an external device. That is, it can be a diagnostic programming device, a production line programming device, or even an Over the Air (OTA) master control device in the entire vehicle. The management server can be a platform provided by a vehicle company to download an ECU software package, and can communicate with the programming tool.

Further, in a process of programming the ECU, the programming tool first sends an authorization request to the ECU to collect device information related to the ECU, and sends an authorization request to the management server on the basis of the device information. The ECU sends the device information related to the ECU to the programming tool according to the authorization request, and the device information can include: current software version information of the ECU, a chip identifier, an anti-replay count value, and other information. Specifically, in the ECU, the collection of the device information based on the software authorization request is first defined, and a diagnostic service is achieved. The programming tool obtains the device information of the ECU by calling the diagnostic service and then uploads the device information to the management server through a mobile data network or a wireless network, so that the management server issues the authorization file on the basis of the received device information.

In step 102, an authorization file sent by the programming tool is received, where the authorization file is generated by the management server according to the device information and sent to the programming tool, and the authorization file is signed and encrypted through a private key of the management server.

In the embodiments of the present disclosure, after receiving device information, the management server can generate the authorization file and a software package on the basis of the device information. The authorization file is used for verifying a source of the software package and determining that the software package is from the management server, rather than other non-compliant sources.

Further, an authorized public key and private key pair is preset in the management server, and a public key corresponding to a private key of the management server is preset in the ECU. The management server signs and encrypts the authorization file through the private key and then sends the signed and encrypted authorization file to the programming tool. The programming tool can program the ECU with the authorization file through a Controller Area Network (CAN) or an Ethernet network. The ECU can verify the signature of the authorization file and decrypt the authorization file through the preset public key.

Due to the unique correspondence between the private key and the public key, the private key is saved in the management server, and the public key is saved in the ECU. When the authorization file of the management server is signed and encrypted using the private key, only the corresponding public key can verify the signature for decryption. Therefore, if the public key can decrypt the private key, it indicates that the authorization file is issued by the management server and from a compliant file. The private key and the public key are set to verify the authorization file, the ECU can be avoided from being programmed with software packages of other third parties, which may pose a security risk.

In step 103, software package feature information is acquired from the authorization file in a case that the authorization file is successfully decrypted through a locally stored public key, and the device information is compared with the software package feature information to obtain a comparison result.

In the embodiments of the present disclosure, if the ECU cannot verify the signature of the authorization file for decryption through the local public key, the verification performed by the ECU on the authorization file fails, and the software package in the programming tool cannot be programmed to the ECU. If the ECU can verify the signature of the authorization file for decryption through the local public key, it indicates that the authorization file is from the management server, and the software package feature information saved in the authorization file can be further verified to determine whether to program the ECU with the software package.

Further, it can be determined by comparing the software package feature information with the device information, whether the software package can be programmed to the ECU. The software package feature information can include: a version number of the software package, a chip identifier of the ECU, an anti-replay count value, and the like. For example, the chip identifier of the ECU can be matched with a chip identifier in the device information. If the chip identifiers are consistent, comparison verification is continued performed on other pieces of information; and if other pieces of information are inconsistent, the verification of the authentication file fails, and the process of programming the ECU ends. According to the present application, the software package feature information saved in the authentication file is further verified after the signature verification performed on the private key of the authentication file succeeds, so as to further determine whether the software package in the programming tool is a software package that meets an ECU programming tool, for example, whether the version number is correct and whether the chip identifier is correct, which further ensures the standardization of software package programming and avoids a decrease in the programming efficiency and a trouble of subsequent error correction due to a programming error.

Optionally, the device information includes a first chip identifier and a first anti-replay count value; the software package feature information includes a second chip identifier and a second anti-replay count value; an anti-replay count value is used for characterizing the number of times the software package of the electronic controller is updated; and step 103 specifically includes:
In sub-step 1031, whether the first anti-replay count value is less than the second anti-replay count value is compared in a case that the first chip identifier and the second chip identifier succeed in matching.

In the embodiments of the present disclosure, the chip identifier is used for representing a chip identifier identity of the ECU. A programming device acquires the first chip identifier provided by the ECU from the ECU and sends the first chip identifier to the management server. The management server generates the authorization file and the software package according to the first chip identifier sent by the programming tool and other pieces of device information. At the same time, when generating the authorization file, the management server encrypts the received first chip identifier as the second identifier, and adds the second identifier to the authorization file. That is, if the second identifier in the authorization file is consistent with the first identifier of the electronic controller, it indicates that the authorization file is generated on the basis of the device information and is an authentication file corresponding to the ECU. If the first identifier is not matched with the second identifier, it indicates that the authorization file is not generated on the basis of the device information of the ECU. The verification of the authorization file fails, and the software package programming process ends.

Further, if the first chip identifier and the second chip identifier succeed in matching, the first anti-replay count value and the second anti-replay count value are continued to be compared. The anti-replay count value is used for characterizing the number of times the software package in the ECU is programmed. If the version of the software package of the management server is newer than the version of the software package in the ECU, the second anti-replay count value should be greater than the first anti-replay count value, so that the electronic controller determines that the software package to be programmed is newer than the current software package.

In sub-step 1032, the software package programming step is quit if the first anti-replay count value is greater than or equal to the second anti-replay count value.

In the embodiments of the present disclosure, if the first anti-replay count value is greater than or equal to the second anti-replay count value, it indicates that the software package received by the programming tool is not newer than the software package currently run in the ECU, and the ECU will not allow
the programming tool to program the ECU with the software package.

In sub-step 1033, it is determined, if the first anti-replay count value is less than the second anti-replay count value, that the comparison result satisfies a preset condition.

In the embodiments of the present disclosure, if the first anti-replay count value is less than the second anti-replay count value, it indicates that the version of the software package satisfies the preset condition, the verification of the software package feature information of the authorization file succeeds, and the software package can be programmed to the ECU. After the software package is programmed to the ECU, a current anti-replay count value of the ECU is updated to the second anti-replay count value. The ECU records the current software version on the ECU by updating its own anti-replay count value, so as to avoid a security program caused by the fact that a software package with a current ECU version is programmed to the ECU.

In step 104, a software package sent by the programming tool is received in a case that the comparison result satisfies a preset condition and, the electronic controller is programmed with the software package, where the software package is generated by the management server according to the device information and sent to the programming tool.

In the embodiments of the present disclosure, the comparison result can be obtained by comparing the device information with various contents included in the software package feature information. If the comparison result satisfies the preset condition, the programming tool implements the step of programming the ECU with the software package. If the comparison result does not satisfy the preset condition, the software package programming process ends.

Optionally, the software package feature information includes a first feature value of the software package; the first feature value is obtained by calculating a content of the software package by the management server through a preset encryption algorithm; after step 104, the method further includes:
In step 105, after the programming of the software package is completed, the content of the software package is calculated by using the preset encryption algorithm to obtain a second feature value.

In the embodiments of the present disclosure, in order to ensure that the software package will not be tampered with during transmission, the content of the software package can be encrypted for verification on the management server and electronic controller.

Specifically, after the software package corresponding to the device information is found by matching, the management server can use the preset encryption algorithm to calculate the first feature value of the content of the software package, and the preset encryption algorithm can be an SM3 encryption algorithm. For example, after the management server generates the software package, the SM3 algorithm first divides software package data into several groups according to a size of 512 bits. The last group will be filled to 512 bits according to a rule if it is less than 512 bits. After multiple rounds of iterative compression, an abstract value with a length of 256 bits is output. The abstract value of 256 can be used as the first feature value. The management server also adds the first feature value to the authorization file and encrypts the authorization file with the private key.

After the software package is programmed to the electronic controller, the electronic controller can use the same preset encryption algorithm, such as the SM3 algorithm, to calculate the content of the software package. An abstract value of 256 bits corresponding to the software package is obtained via the calculation. If the software package of the management server is consistent with the software package of the electronic controller, the first feature value and the second feature value are the same calculated features shall have consistent sizes. If the first feature value and the second feature value are inconsistent, it indicates that the software package of the management server is inconsistent with the software package of the electronic controller, and the software package may be tampered with. By the comparison between the first feature value and the second feature value, it can further ensure the security of software package transmission and prevent a tampered software package from being run on the electronic controller.

In step 106, the software package is run on the electronic controller in a case that the first feature value and the second feature value succeed in matching.

In the embodiments of the present disclosure, if the first feature value and the second feature value succeed in matching, it indicates that the software package generated by the management server is consistent with the software package programmed to the electronic controller, and the software package can be run normally on the electronic controller.

In step 107, the software package of the electronic controller is rolled back to an original version in a case that the first feature value and the second feature value fail in matching.

In the embodiments of the present disclosure, if the first feature value and the second feature value fail in matching, it indicates that the software package generated by the management server is inconsistent with the software package programmed to the electronic controller, and the software package is possibly tempered with. The software package of the electronic controller is rolled back to a version before the programming or to a default version.

Referring to FIG. 2, FIG. 2 is a flowchart of an ECU software programming authorization protection method, which includes: In step T1, authorization public and private keys are preset on a management server, and a public key and an authorization verification program are preset on an ECU; in step T2, a programming tool collects device information from the ECU; in step T3, the management server generates and downloads a software package and an authorization file; in step T4, an electronic controller verifies an ECU software authorization file and programs the software package; and in step T5, the electronic controller verifies validities of the ECU software authorization file and the software package when the electronic controller is started.

Optionally, a one-time programmable (OTP) memory of the electronic controller is pre-configured with a public key corresponding to the private key in the management server, and the electronic controller programming method; the programming tool and the management server transmit data on the basis of a secure transfer protocol; and the programming tool and the electronic controller transmit data through a bus network or an Ethernet network.

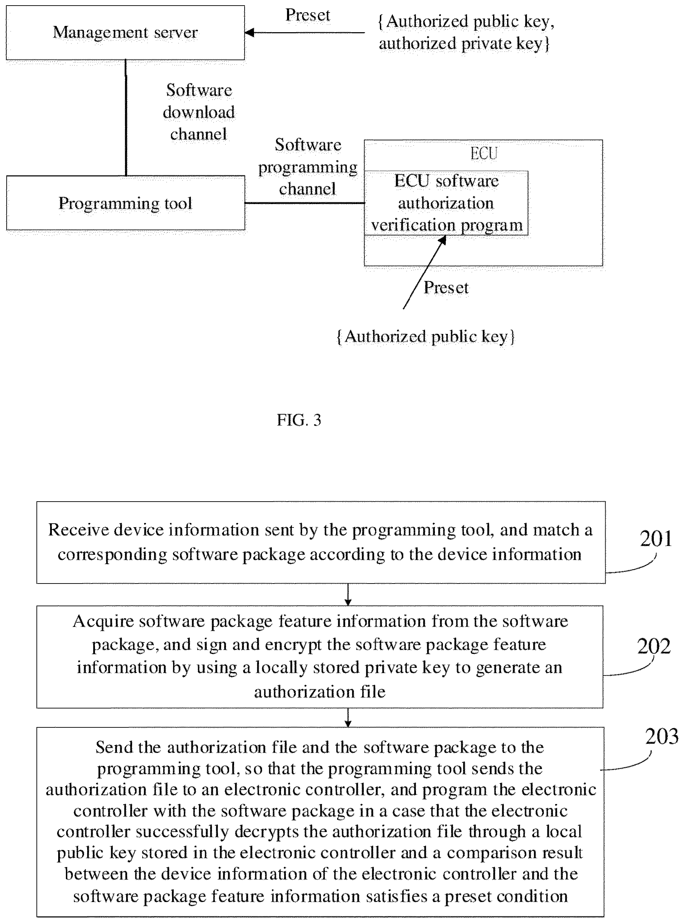

In the embodiments of the present disclosure, referring to FIG. 3, the management platform server is pre-configured with an authorized public key and an authorization private key. In order to ensure that the public key saved in the ECU is not tampered with, the public key can be burned to the OTP memory in an ECU production line. The OTP also stores the electronic controller programming method, namely, the software authorization verification program of the ECU. If the data is burned to OTP, the data cannot be changed or cleared again, thus ensuring the security of the public key and the standardization of the ECU programming process. Each programming is verified according to the verification program stored in the OTP, which ensures the security of the software package of the ECU. This can effectively prevent abuse of privileged software versions that are leaked internally or old versions with vulnerabilities and improve the security of the ECU.

In summary, in the embodiments of the present application, the electronic controller communicates with the programming tool; the programming tool also communicates with the management server; in response to the authorization request sent by the programming tool, the electronic controller sends the device information to the programming tool; the programming tool sends the device information to the management server, so that the management server can generate, according to the device information, the authorization file encrypted by the private key, and the software package and send the authorization file and the software package to the programming tool; the programming tool programs the electronic controller with the authorization file; the electronic controller uses the local public key to perform signature verification on the authorization file; in a case that the signature verification succeeds, the software packet feature information in the authorization file is further compared with the device information; and the software package is programmed to the electronic controller in a case that the comparison result satisfies the preset condition. The present application performs, by using the public key of the electronic controller, the signature verification on the authorization file encrypted by the private key of the management server to confirm that the authorization file and the software package are both from the management server, rather than other third parties, which ensures the security of the software package. Further, the present application further compares the software package feature information in the authorization file with the device information to determine whether the software package is a software package that satisfies the preset condition, which further avoids the security risk because an unmatched software package is programmed to the electronic controller, and also saves the cost of subsequent correction.

FIG. 4 shows a flowchart of steps of an electronic controller programming method according to an embodiment of the present disclosure, which is applied to a management server, where the electronic controller communicates with a programming tool, and the method includes:
In step 201, device information sent by the programming tool is received, and a corresponding software package is matched according to the device information.

In the embodiments of the present disclosure, referring to FIG. 3, FIG. 3 shows interaction diagram of a programming process. The programming tool communicates with the management server. After acquiring the device information of an ECU, the programming tool can transmit the device information to the management server. The management server generates an authorization file and a software package on the basis of the device information. The generated authorization file and software package can be transmitted to the programming tool through a software download channel for the communication between the management server and the programming tool.

Optionally, the device information includes version information of a software package in an electronic controller, and step 201 specifically includes:
In sub-step 2011, whether a target software package with version information later than the version information of the software package in the electronic controller exists in the management server is determined according to the version information of the software package in the electronic controller.

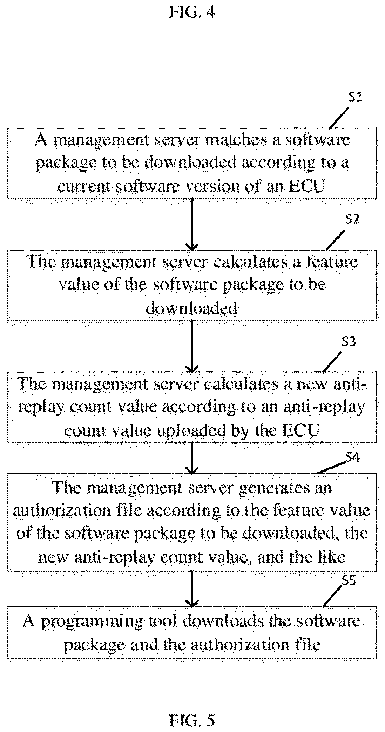

In the embodiments of the present disclosure, referring to FIG. 5, FIG. 5 is a flowchart of generating an authorization file and a software package by a management server. In step S 1, the management server matches a software package to be downloaded according to a current software version of the ECU. The device information includes the version information of the software package in the electronic controller, and the version information of the software package can be used for characterizing update time of the software package. The management server can determine, according to the version information in the device information, software packages that the electronic controller can download in the current version state. Specifically, the management server can select a software package with a version later than the version of the software package in the electronic controller as the target software package that is matched with the device information.

In sub-step 2012, if the target software package exists, the target software package is used as a software package that is matched with the device information.

In the embodiments of the present disclosure, if the target software package exists, the target software package is used as the software package that is matched with the device information.

In sub-step 2013, the software package programming step is quit if the target software package does not exist.

In the embodiments of the present disclosure, if the target software package does not exist, it indicates that the software package currently run in the electronic controller has been already a software package with the latest version, and the electronic controller does not need to be programmed. The software package programming step is quit.

In step 202, software package feature information is acquired from the software package, and the software package feature information is signed and encrypted by using a locally stored private key to generate an authorization file.

In the embodiments of the present disclosure, in step S4, the management server generates the authorization file according to a feature value of the software package to be downloaded, a new anti-replay count value, and the like. The software package feature information can include: version information, description, size, and feature value of the software package, and information (such as a chip identity identifier) exclusive for the ECU. The software package feature information is signed and encrypted using the private key to generate the authorization file, and an encryption algorithm is, for example, the National Cryptographic Algorithm SM2. The generated authorization file can be transmitted through a secure transfer protocol such as Hypertext Transfer Protocol Secure (HTTPS).

Optionally, the device information includes a first anti-replay count value, and step 202 specifically includes:
In sub-step 2021, the first anti-replay count value is corrected to obtain a second anti-replay count value corresponding to the software package.

In the embodiments of the present disclosure, referring to FIG. 5, in step S2, the management server calculates a feature value of the software package to be downloaded. After the management server generates a new software package according to the device information, the management server needs to correct an anti-replay count value corresponding to the software package, so as to indicate that the current software package is a software package that is newer than a software package that is currently run on the electronic controller.

Specifically, during correction, one can be added to the first anti-replay count value to obtain the second anti-replay count value.

In sub-step 2022, the second anti-replay count value is added to the software package feature information.

In the embodiments of the present disclosure, the calculated second anti-replay count value is added to the software package feature information, so that after the electronic controller successfully verifies the signature encryption of the authorization file, whether the new software package is a software package that is newer than the currently run software package can be determined according to the second anti-replay count value in the authorization file, and then whether to program the new software package to the electronic controller is decided.

Optionally, step 202 specifically includes:
In sub-step 2023, a content of the software package is calculated by using a preset encryption algorithm to obtain a first feature value corresponding to the software package, where the first feature value is used for being matched with the second feature value to determine whether the software package is able to be run on the electronic controller, and the second feature value is calculated by the preset encryption algorithm after the electronic controller receives the software package.

In the embodiments of the present disclosure, referring to FIG. 5, in step S2, the management server calculates a feature value of the software package to be downloaded. The management server can calculate the content of the software package through the preset encryption algorithm to obtain the corresponding first feature value, and save the first feature value in the authorization file, so that the electronic controller can calculate, after the software package is programmed, the second feature value corresponding to the programmed software package by using the same preset encryption algorithm, and then determine whether the software package has been tampered with. A specific calculation method can refer to the description in step 105 and will not be further elaborated here.

In sub-step 2024, the first feature value is added to the software package feature information.

In the embodiments of the present disclosure, the first feature value is added to the software package feature information, and the software package feature information is encrypted using the private key to generate the authorization file. The electronic controller can determine whether the software package can be programmed to the electronic controller by verifying the authorization file.

In step 203, the authorization file and the software package are sent to the programming tool, so that the programming tool sends the authorization file to an electronic controller, and the electronic controller is programmed with the software package in a case that the electronic controller successfully decrypts the authorization file through a local public key stored in the electronic controller and a comparison result between the device information of the electronic controller and the software package feature information satisfies a preset condition.

In the embodiments of the present disclosure, in step S5, the programming tool downwards the software package and the authorization file. The management server can transmit the authorization file encrypted using the private key, and the software package to the programming tool. In the same way, the software package can also be transmitted after being encrypted using the private key. Referring to FIG. 2, after acquiring the software package and the authorization file, the programming tool can program the software package to the electronic controller through a software programming channel in a case that the verification performed by the electronic controller on the authorization file succeeds, thus completing the programming progress of the ECU of the vehicle once.

Optionally, before step 201, the method further includes:
In step 204, a private key and a public key corresponding to the private key are generated, and the private key is saved locally.

In the embodiments of the present disclosure, the public key and the private key can be generated in the management server. Specifically, a Public Key Infrastructure (PKI) system can be configured in the management server. The public key infrastructure is a set including hardware, software, personnel, policies, and procedures, which is used for achieving functions such as generation, management, storage, distribution, and revocation of secret keys and certificates based on a public key cryptosystem. An authorized public key and private key pair is generated in the PKI system. An authorized private key is stored in an encryptor of the PKI system, ensuring that the authorized private key will not be stolen, and an authorized public key is exported.

In step 205, the public key is transmitted to the electronic controller through encrypted transmission, so that the electronic controller stores the public key in the OTP memory of the electronic controller.

In the embodiments of the present disclosure, the public key generated by the management server can be transmitted to the electronic controller through secure transmission, and the public key is burned in the OTP of the electronic controller to ensure that the public key will not be tampered with.

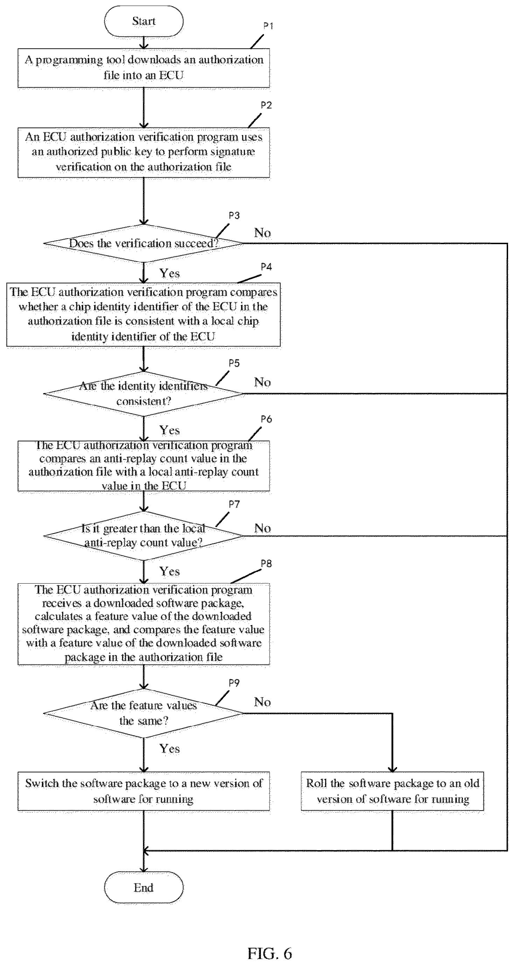

Referring to FIG. 3 and FIG. 6, FIG. 6 is a flowchart of software package programming operation.

P1. A programming tool downloads an authorization file into an ECU. For example, the programming tool programs the authorization file to the ECU through a CAN or an Ethernet network, and a programming protocol can refer to a Unified Diagnostic Service (UDS) diagnostic programming protocol.

P2. An ECU authorization verification program uses an authorized public key to perform signature verification on the authorization file. For example, the ECU authorization verification program uses the authorized public key and a national cryptographic algorithm SM2 to verify the signature of the authorization file.

P3. If the signature verification of the authorization file fails, programming is not allowed, and the process ends; and if the signature verification of the authorization file succeeds, step P4 is performed.

P4. The ECU authorization verification program compares whether a chip identity identifier of the ECU in the authorization file is consistent with a local chip identity identifier of the ECU.

P5. If the chip identity identifiers are inconsistent, programming is not allowed, and the process ends; and if the chip identity identifiers are consistent, step P6 is performed.

P6. The ECU authorization verification program compares an anti-replay count value in the authorization file with an anti-replay count value stored locally in the ECU.

P7. If the anti-replay count value in the authorization file is not greater than the anti-replay count value stored locally in the ECU, programming is not allowed, and the process ends; and if the anti-replay count value in the authorization file is greater than the anti-replay count value stored locally in the ECU, step P8 is performed.

P8. The ECU authorization verification program receives a downloaded software package, calculates a feature value of the downloaded software package, and compares the feature value with a feature value of the downloaded software package in the authorization file.

P9. If the feature value of the downloaded software package is different from the feature value in the authorization file, the software package is rolled back to an original software version; and if the feature values are the same, the software package is allowed to be switched to a new version of software for running.

In summary, in the embodiments of the present application, the electronic controller communicates with the programming tool; the programming tool also communicates with the management server; in response to the authorization request sent by the programming tool, the electronic controller sends the device information to the programming tool; the programming tool sends the device information to the management server, so that the management server can generate, according to the device information, the authorization file encrypted by the private key, and the software package and send the authorization file and the software package to the programming tool; the programming tool programs the electronic controller with the authorization file; the electronic controller uses the local public key to perform signature verification on the authorization file; in a case that the signature verification succeeds, the software packet feature information in the authorization file is further compared with the device information; and the software package is programmed to the electronic controller in a case that the comparison result satisfies the preset condition. The present application performs, by using the public key of the electronic controller, the signature verification on the authorization file encrypted by the private key of the management server to confirm that the authorization file and the software package are both from the management server, rather than other third parties, which ensures the security of the software package. Further, the present application further compares the software package feature information in the authorization file with the device information to determine whether the software package is a software package that satisfies the preset condition, which further avoids the security risk because an unmatched software package is programmed to the electronic controller, and also saves the cost of subsequent correction.

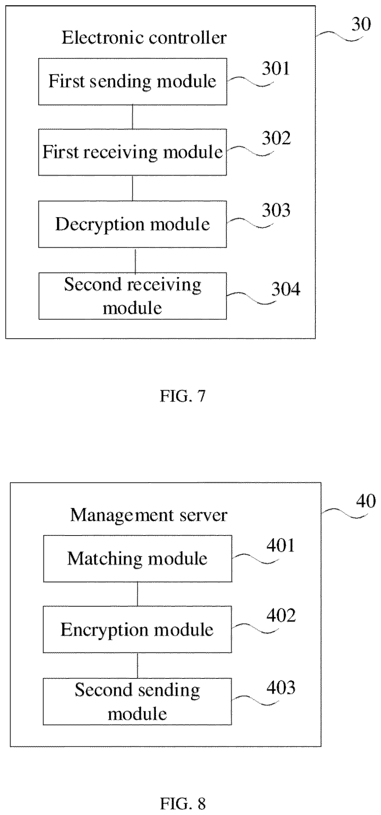

FIG. 7 shows a block diagram of an electronic controller according to an embodiment of the present disclosure. The electronic controller 30 includes:
a first sending module 301, configured to send device information to the programming tool in response to an authorization request sent by a programming tool, so that the programming tool sends the device information to a management server;
a first receiving module 302, configured to receive an authorization file sent by the programming tool, where the authorization file is generated by the management server according to the device information and sent to the programming tool, and the authorization file is signed and encrypted through a private key of the management server;
a decryption module 303, configured to acquire software package feature information from the authorization file in a case that the electronic controller successfully decrypts the authorization file through a locally stored public key, and compare the device information with the software package feature information to obtain a comparison result; and
a second receiving module 304, configured to receive, in a case that the comparison result satisfies a preset condition, a software package sent by the programming tool, and program the electronic controller with the software package, where the software package is generated by the management server according to the device information and sent to the programming tool.

Optionally, the software package feature information includes a first feature value of the software package; the first feature value is obtained by calculating a content of the software package by the management server through a preset encryption algorithm; the electronic controller further includes:
a calculation module, configured to calculate, after the programming of the software package is completed, the content of the software package by using the preset encryption algorithm to obtain a second feature value;
a running module, configured to run the software package on the electronic controller in a case that the first feature value and the second feature value succeed in matching; and
a rollback module, configured to roll the software package of the electronic controller back to an original version in a case that the first feature value and the second feature value fail in matching.

Optionally, the device information includes a first chip identifier and a first anti-replay count value; the software package feature information includes a second chip identifier and a second anti-replay count value; an anti-replay count value is used for characterizing the number of times the software package of the electronic controller is updated; and the decryption module includes:
a first determining sub-module, configured to compare, in a case that the first chip identifier and the second chip identifier succeed in matching, whether the first anti-replay count value is less than the second anti-replay count value;
a second determining sub-module, configured to quit the software package programming step if the first anti-replay count value is greater than or equal to the second anti-replay count value; and
a determination sub-module, configured to determine, if the first anti-replay count value is less than the second anti-replay count value, that the comparison result satisfies the preset condition.

Optionally, an OTP memory of the electronic controller is pre-configured with a public key corresponding to the private key in the management server, and the electronic controller programming method;
the programming tool and the management server transmit data on the basis of a secure transfer protocol; and the programming tool and the electronic controller transmit data through a bus network or an Ethernet network.

FIG. 8 is a block diagram of a management server 40 according to an embodiment of the present disclosure. The management server includes:
a matching module 401, configured to receive device information sent by a programming tool, and match a corresponding software package according to the device information;
an encryption module 402, configured to acquire software package feature information from the software package, and sign and encrypt the software package feature information by using a locally stored private key to generate an authorization file; and
a second sending module 403, configured to send the authorization file and the software package to the programming tool, so that the programming tool sends the authorization file to an electronic controller, and program the electronic controller with the software package in a case that the electronic controller successfully decrypts the authorization file through a local public key stored in the electronic controller and a comparison result between the device information of the electronic controller and the software package feature information satisfies a preset condition.

Optionally, the device information includes a first anti-replay count value, and the encryption module includes:
a correction module, configured to correct the first anti-replay count value to obtain a second anti-replay count value corresponding to the software package; and
a first adding sub-module, configured to add the second anti-replay count value to the software package feature information.

Optionally, the encryption module includes:
a feature value determination sub-module, configured to calculate a content of the software package by using a preset encryption algorithm to obtain a first feature value corresponding to the software package, where the first feature value is used for being matched with the second feature value to determine whether the software package is able to be run on the electronic controller, and the second feature value is calculated by the preset encryption algorithm after the electronic controller receives the software package; and
a second adding sub-module, configured to add the first feature value to the software package feature information.

Optionally, the device information includes version information of a software package in an electronic controller, and the matching module includes:
a software package acquisition sub-module, configured to determine, according to the version information of the software package in the electronic controller, whether a target software package with version information later than the version information of the software package in the electronic controller exists in the management server;
a matching sub-module, configured to use, if the target software package exists, the target software package as a software package that is matched with the device information; and
a quitting sub-module, configured to quit the software package programming step if the target software package does not exist.

Optionally, the management server further includes:
a secret key generation module, configured to generate a private key and a public key corresponding to the private key, and save the private key locally; and
a public key outputting module, configured to transmit the public key to the electronic controller through encrypted transmission, so that the electronic controller stores the public key in the OTP memory of the electronic controller.

In summary, in the embodiments of the present application, the electronic controller communicates with the programming tool; the programming tool also communicates with the management server; in response to the authorization request sent by the programming tool, the electronic controller sends the device information to the programming tool; the programming tool sends the device information to the management server, so that the management server can generate, according to the device information, the authorization file encrypted by the private key, and the software package and send the authorization file and the software package to the programming tool; the programming tool programs the electronic controller with the authorization file; the electronic controller uses the local public key to perform signature verification on the authorization file; in a case that the signature verification succeeds, the software packet feature information in the authorization file is further compared with the device information; and the software package is programmed to the electronic controller in a case that the comparison result satisfies the preset condition. The present application performs, by using the public key of the electronic controller, the signature verification on the authorization file encrypted by the private key of the management server to confirm that the authorization file and the software package are both from the management server, rather than other third parties, which ensures the security of the software package. Further, the present application further compares the software package feature information in the authorization file with the device information to determine whether the software package is a software package that satisfies the preset condition, which further avoids the security risk because an unmatched software package is programmed to the electronic controller, and also saves the cost of subsequent correction.

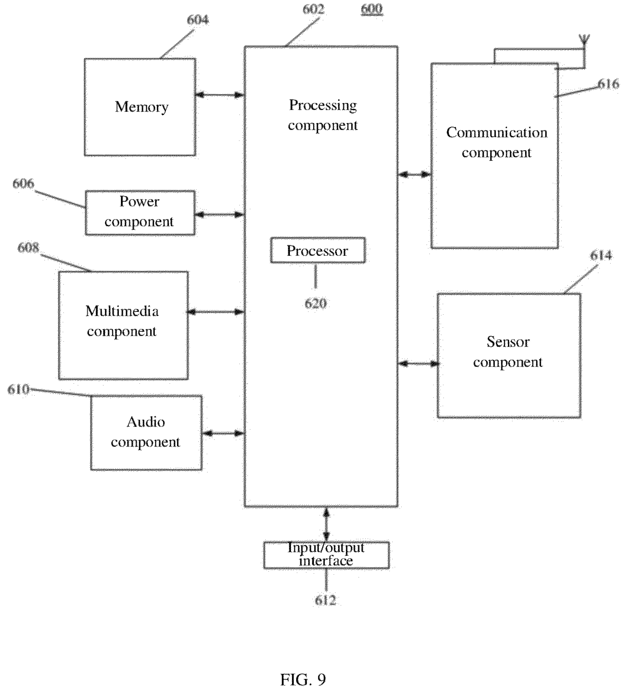

FIG. 9 is a block diagram of an electronic device 600 according to an exemplary embodiment. For example, the electronic device 600 can be a mobile phone, a computer, a digital broadcasting terminal, a message transceiver device, a game console, a tablet device, a medical device, a fitness device, a personal digital assistant, and the like.

Referring to FIG. 9, the electronic device 600 may include one or more of the following components: a processing component 602, a memory 604, a power component 606, a multimedia component 608, an audio component 610, an Input/Output (I/O) interface 612, a sensor component 614, and a communication component 616.

The processing component 602 usually controls overall operations of the electronic device 600, such as operations associated with displaying, telephone calls, data communications, camera operations, and recording operations. The processing component 602 may include one or more processors 620 to execute instructions to complete all or part of the steps of the above methods. In addition, the processing component 602 may include one or more modules to facilitate interaction between the processing component 602 and other components. For example, the processing component 602 may include a multimedia module to facilitate interaction between the multimedia component 608 and the processing component 602.

The memory 604 is configured to store various types of data to support operations performed on the electronic device 600. Examples of the data include instructions, contact data, telephone directory data, messages, pictures, multimedia, and the like of any application program or method operated on the electronic device 600. The memory 604 can be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 606 provides power for the various components of the electronic device 600. The power component 606 may include a power management system, one or more power supplies, and other components associated with generating, managing, and distributing power for the electronic device 600.

The multimedia component 608 includes a screen providing an output interface between the electronic device 600 and a user. In some embodiments, the screen may include a liquid crystal display (LCD) and a touch panel (TP). If the screen includes a TP, the screen may be implemented as a touch screen, to receive an input signal from the user. The TP includes one or more touch sensors to sense touching, sliding, and gestures on the TP. The touch sensor can not only sense boundaries of touch or sliding actions, but also detect durations and pressures related to the touch or sliding operations. In some embodiments, the multimedia component 608 includes a front camera and/or a rear camera. When the electronic device 600 is in an operating mode, such as a photographing mode or a multimedia mode, the front camera and/or rear camera can receive external multimedia data. Each front camera and each rear camera can be a fixed optical lens system or have a focal length and an optical zoom capability.

The audio component 610 is configured to output and/or input an audio signal. For example, the audio component 610 includes a microphone (MIC). When the electronic device 600 is in the operating mode, such as a call mode, a recording mode, and a voice recognition mode, the microphone is used for receiving an external audio signal. The received audio signal may be further stored in the memory 604 or sent through the communication assembly 616. In some embodiments, the audio component 610 also includes a speaker for outputting an audio signal.

The I/O interface 612 provides an interface between the processing component 602 and a peripheral interface module, and the above peripheral interface module can be a keyboard, a click wheel, a button, and the like. These buttons may include but are not limited to: a home button, a volume button, a start button, and a lock button.

The sensor component 614 includes one or more sensors used for providing state evaluations of various aspects for the electronic device 600. For example, the sensor component 614 can detect on/off states of the electronic device 600 and relative positions of the components. For example, the components are a display and a keypad of the electronic device 600. The sensor component 614 can also detect a change in a position of the electronic device 600 or a component of the electronic device 600, presence or absence of a contact of a user with the electronic device 600, an orientation or acceleration/deceleration of the electronic device 600, and a change in a temperature of the electronic device 600. The sensor component 614 may include a proximity sensor, configured to detect presence of a nearby object without any physical contact. The sensor component 614 may also include a light sensor, such as a Complementary Metal-Oxide-Semiconductor Transistor (CMOS) or a Charge Coupled Device (CCD) image sensor, used in imaging applications. In some embodiments, the sensor component 614 may also include an acceleration sensor, a gyroscope sensor, a magnetic sensor, a pressure sensor, or a temperature sensor.

The communication component 616 is configured to facilitate wired or wireless communications between the electronic device 600 and other devices. The electronic device 600 can access a wireless network based on a communication standard, such as WiFi, an operator network (such as 2G, 3G, 4G, or 5G), or a combination thereof. In an exemplary embodiment, the communication component 616 receives a broadcast signal from an external broadcast management system through a broadcast channel, or broadcasts related information. In an exemplary embodiment, the communication component 616 further includes a Near-Field Communication (NFC) module to promote short-range communications. For example, the NFC module can be implemented on the basis of a Radio Frequency Identification (RFID) technology, an Infrared Data Association (IrDA) technology, an Ultra-Wide Band (UWB) technology, a Bluetooth (BT) technology, and other technologies.

In an exemplary embodiment, the electronic device 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic elements, so as to implement an electronic controller programming method provided in the embodiments of the present application.

In an exemplary embodiment, a non-temporary computer-readable storage medium including instructions, such as the memory 604 including instructions. The above instructions are executable by the processor 620 of the electronic device 600 to complete the above methods. For example, the non-temporary storage medium can be a ROM, a RAM, a CD-ROM, a magnetic tape, a floppy disk, an optical data storage device, and the like.

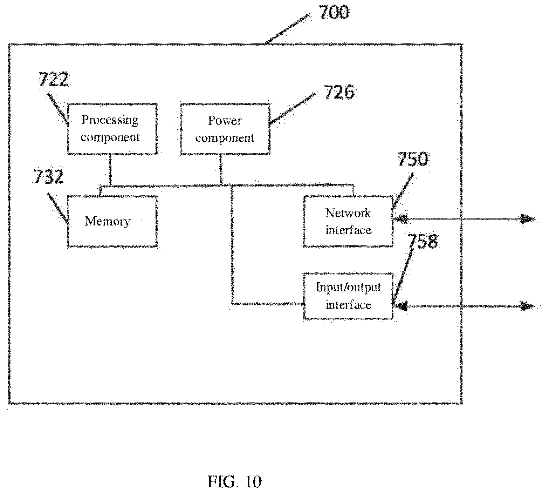

FIG. 10 is a block diagram of an electronic device 700 according to an exemplary embodiment. For example, the electronic device 700 can be provided as a server. Referring to FIG. 10, the electronic device 700 includes a processing component 722, which further includes one or more processors and a memory resource represented by a memory 732, configured to store instructions, such as application programs, that can be executed by the processing component 722. The application programs stored in the memory 732 may include one or more modules, each of which corresponds to a group of instructions. In addition, the processing component 722 is configured to execute the instructions to implement an electronic controller programming method provided according to the embodiments of the present application.

The electronic device 700 may also include a power component 726, configured to perform power management on the electronic device 700, a wired or wireless network interface 750, configured to connect the electronic device 700 to a network, and an I/O interface 758. The electronic device 700 can operate an operating system stored in the memory 732, such as WindowsServerTM, Mac OS XTM, UnixTM, LinuxTM, FreeBSDTM, or similar systems.

The embodiments of the present application further provide a computer program product, including a computer program. The computer program, when executed by a processor, implements the electronic controller programming method.

Those skilled in the art will easily come up with other implementations of the present application after considering this specification and implementing the application disclosed herein. The present application aims to cover any variations, uses, or adaptive changes of the present application, and these variations, uses, or adaptive changes follow the general principles of the present application and include common knowledge or customary technical means in the technical field that are not disclosed herein. The specification and the embodiments are considered as merely exemplary, and the scope and spirit of the present application are pointed out in the following claims.

It should be understood that the present application is not limited to the precise structures that have been described above and shown in the drawings, and various modifications and changes can be made without departing from the scope of the present application. The scope of the present application is subject only to the appended claims.

## Claims

1. An electronic controller programming method, applied to an electronic controller, wherein the electronic controller communicates with a programming tool, and the method comprises:
sending device information to the programming tool in response to an authorization request sent by the programming tool, so that the programming tool sends the device information to a management server;
receiving an authorization file sent by the programming tool, wherein the authorization file is generated by the management server according to the device information and sent to the programming tool, and the authorization file is signed and encrypted through a private key of the management server;
acquiring software package feature information from the authorization file in a case that the authorization file is successfully decrypted through a locally stored public key, and comparing the device information with the software package feature information to obtain a comparison result; and
receiving, in a case that the comparison result satisfies a preset condition, a software package sent by the programming tool, and programming the electronic controller with the software package, wherein the software package is generated by the management server according to the device information and sent to the programming tool.

2. The method according to claim 1, wherein the software package feature information comprises a first feature value of the software package; the first feature value is obtained by calculating a content of the software package by the management server through a preset encryption algorithm; after the receiving, in a case that the comparison result satisfies a preset condition, a software package sent by the programming tool, and programming the electronic controller with the software package, the method further comprises:
calculating, after the programming of the software package is completed, the content of the software package by using the preset encryption algorithm to obtain a second feature value;
running the software package on the electronic controller in a case that the first feature value and the second feature value succeed in matching; and
rolling the software package of the electronic controller back to an original version in a case that the first feature value and the second feature value fail in matching.

3. The method according to claim 1, wherein the device information comprises a first chip identifier and a first anti-replay count value; the software package feature information comprises a second chip identifier and a second anti-replay count value; an anti-replay count value is used for characterizing the number of times the software package of the electronic controller is updated; the comparing the device information with the software package feature information to obtain a comparison result comprises:
comparing, in a case that the first chip identifier and the second chip identifier succeed in matching, whether the first anti-replay count value is less than the second anti-replay count value;
quitting a software package programming step if the first anti-replay count value is greater than or equal to the second anti-replay count value; and
determining, if the first anti-replay count value is less than the second anti-replay count value, that the comparison result satisfies the preset condition.

4. The method according to claim 1, wherein a one-time programmable (OTP) memory of the electronic controller is pre-configured with a public key corresponding to the private key in the management server, and the electronic controller programming method;
the programming tool and the management server transmit data on the basis of a secure transfer protocol; and the programming tool and the electronic controller transmit data through a bus network or an Ethernet network.

5. An electronic controller programming method, applied to a management server, wherein the management server communicates with a programming tool, and the method comprises:
receiving device information sent by the programming tool, and matching a corresponding software package according to the device information;
acquiring software package feature information from the software package, and signing and encrypting the software package feature information by using a locally stored private key to generate an authorization file; and
sending the authorization file and the software package to the programming tool, so that the programming tool sends the authorization file to an electronic controller, and programming the electronic controller with the software package in a case that the electronic controller successfully decrypts the authorization file through a local public key stored in the electronic controller and a comparison result between the device information of the electronic controller and the software package feature information satisfies a preset condition.

6. The method according to claim 5, wherein the device information comprises a first anti-replay count value, and the acquiring software package feature information from the software package comprises:
correcting the first anti-replay count value to obtain a second anti-replay count value corresponding to the software package; and
adding the second anti-replay count value to the software package feature information.

7. The method according to claim 5, wherein the acquiring software package feature information from the software package comprises:
calculating a content of the software package by using a preset encryption algorithm to obtain a first feature value corresponding to the software package, wherein the first feature value is used for being matched with the second feature value to determine whether the software package is able to be run on the electronic controller, and the second feature value is calculated by the preset encryption algorithm after the electronic controller receives the software package; and
adding the first feature value to the software package feature information.

8. The method according to claim 1, wherein the device information comprises version information of a software package in the electronic controller, and the matching a corresponding software package according to the device information comprises:
determining, according to the version information of the software package in the electronic controller, whether a target software package with version information later than the version information of the software package in the electronic controller exists in the management server;
using, if the target software package exists, the target software package as a software package that is matched with the device information; and
quitting a software package programming step if the target software package does not exist.

9. The method according to claim 5, wherein before the receiving device information sent by the programming tool, the method further comprises:
generating a private key and a public key corresponding to the private key, and saving the private key locally; and
transmitting the public key to the electronic controller through encrypted transmission, so that the electronic controller stores the public key in a one-time programmable (OTP) memory of the electronic controller.

10. An electronic controller, wherein the electronic controller comprises:
a first sending module, configured to send device information to the programming tool in response to an authorization request sent by a programming tool, so that the programming tool sends the device information to a management server;
a first receiving module, configured to receive an authorization file sent by the programming tool, wherein the authorization file is generated by the management server according to the device information and sent to the programming tool, and the authorization file is signed and encrypted through a private key of the management server;
a decryption module, configured to acquire software package feature information from the authorization file in a case that the electronic controller successfully decrypts the authorization file through a locally stored public key, and compare the device information with the software package feature information to obtain a comparison result; and
a second receiving module, configured to receive, in a case that the comparison result satisfies a preset condition, a software package sent by the programming tool, and program the electronic controller with the software package, wherein the software package is generated by the management server according to the device information and sent to the programming tool.

11. A management server, wherein the management server comprises:
a matching module, configured to receive device information sent by a programming tool, and match a corresponding software package according to the device information;
an encryption module, configured to acquire software package feature information from the software package, and sign and encrypt the software package feature information by using a locally stored private key to generate an authorization file; and
a second sending module, configured to send the authorization file and the software package to the programming tool, so that the programming tool sends the authorization file to an electronic controller, and program the electronic controller with the software package in a case that the electronic controller successfully decrypts the authorization file through a local public key stored in the electronic controller and a comparison result between the device information of the electronic controller and the software package feature information satisfies a preset condition.

12. An electronic device, comprising a processor and a memory, wherein the memory stores programs or instructions runnable on the processor, and the programs or the instructions, when executed by the processor, implement the steps of the method according to any one of claims 1 to 9.

13. A readable storage medium, wherein the readable storage medium stores programs or instructions, wherein the programs or instructions, when executed by a processor, implement the steps of the method according to any one of claims 1 to 9.
